# EUROPEAN PATENT APPLICATION

(11) **EP 3 220 318 A1**
(43) Date of publication of application: **20.09.2017**
(21) Application number: 14905685.5
(22) Date of filing: 14.11.2014
(51) Int. Cl.: G06Q 10/02, G06Q 10/08, G06Q 50/10

(54) **SHARED VEHICLE MANAGEMENT DEVICE AND SHARED VEHICLE MANAGEMENT METHOD**

(71) Applicant: NISSAN MOTOR CO., LTD., Yokohama-shi, Kanagawa 221-0023 (JP)
(72) Inventor: HIROSE, Satoru, Atsugi-shi Kanagawa 243-0123 (JP); CHINOMI, Satoshi, Atsugi-shi Kanagawa 243-0123 (JP); NAGAI, Yukiko, Atsugi-shi Kanagawa 243-0123 (JP)
(74) Representative: Global IP Europe Patentanwaltskanzlei
(86) International application number: PCT/JP2014/080174
(87) International publication number: WO 2016/075807

(57) **Abstract**

Provided is a shared vehicle management device (100) comprising: a first storage means (30) for storing information transmitted from a user as reception information; a second storage means (30) for storing information on a plurality of stations where it is possible to lend and return a shared vehicle and for storing information on the history of a user's usage of shared vehicles; a reception management means (10) for making the first storage means (30) store information and accepting reservations from a user to use a shared vehicle, including information on a lending station that has been designated as a station where the user wants a shared vehicle to be lent; and a notification means (10) for notifying the user of lending possibility information that includes information on whether a shared vehicle is available at a predetermined station, including the lending station designated by the user, upon determining that the lending station designated by the user cannot currently offer usage of a shared vehicle.

## Description

### Technical Field

The present invention relates to a shared vehicle management device and a shared vehicle management method for managing a plurality of shared vehicles that are used by a plurality of users.

### Background Art

A car sharing system for a plurality of users to use a plurality of shared vehicles is known. In this car sharing system, a user that has finished using a shared vehicle returns the shared vehicle to a specified station (Patent Document 1).

### Prior Art Documents

### Patent Documents

Patent Document 1: Japanese Laid Open Patent Application No. 2002-215739

### Summary of the Invention

### Problem to be Solved by the Invention

In this type of car sharing system, when a user makes a use reservation for a shared vehicle, if a lendable shared vehicle is not present in the station that the user desires, the user cannot make a use reservation; as a result, there is the problem that the utilization rate of the shared vehicle is reduced.

The problem that the present invention tries to solve is to make it possible to receive a use reservation of a user even when a lendable shared vehicle that is desired by the user is not present in a station, in order to improve the utilization rate of the shared vehicle.

### Means of Achieving the Object

The present invention solves the problem described above, upon determining that at the station at which the user desires to rent, a shared vehicle is currently not available, by notifying the user of information relating to the lending possibility of shared vehicles at predetermined stations that include the station.

### Effects of the Invention

According to the present invention, since the user is notified of information relating to the lending possibility of shared vehicles at predetermined stations that include the station at which the user desires to rent a shared vehicle, even if a shared vehicle cannot be utilized at the desired station of the user, it is possible to propose to the user to utilize a shared vehicle at the desired station and other stations. As a result, opportunities for a shared vehicle to be utilized by the user increases, and the utilization rate of the shared vehicle is improved.

### Brief Description of the Drawings

[Figure 1A] is a schematic diagram illustrating one example of a method for a user to use a shared vehicle in a shared vehicle management system, equipped with the shared vehicle management device according to an embodiment of the present invention.
[Figure 1B] is a block diagram of a shared vehicle management system equipped with the shared vehicle management device according to an embodiment of the present invention.
[Figure 2] is a view illustrating stations at which are disposed shared vehicles that are managed by the shared vehicle management system of Figure 1B.
[Figure 3] is a view illustrating an example of lending possibility information that is notified to the user.
[Figure 4] is a view illustrating an example of return possibility information that is notified to the user.
[Figure 5A] is a flowchart illustrating one example of a control procedure for notifying lending possibility information to the user by the shared vehicle management device according to an embodiment of the present invention.
[Figure 5B] is a flowchart illustrating another example of a control procedure for notifying lending possibility information to the user by the shared vehicle management device according to an embodiment of the present invention.
[Figure 6] is a flowchart illustrating another example of a control procedure for notifying drop-off possibility information to the user by the shared vehicle management device according to an embodiment of the present invention.

### Embodiments to Carry Out the Invention

The shared vehicle management device according to an embodiment of the present invention will be described below, based on the drawings. In the present embodiment, an example will be described in which the shared vehicle management device is applied to a shared vehicle management system for managing and operating a car sharing system, with which a plurality of users share a plurality of shared vehicles disposed in a plurality of stations. The car sharing system of the present embodiment is a so-called drop-off type one-way car sharing system, in which a shared vehicle that is rented from one station is permitted to be returned to another station. A station is a location where shared vehicles can be parked, where shared vehicles can be lent and returned, and where shared vehicles that are not being used can be put on standby, including parking areas that are prepared in advance for the car sharing system.

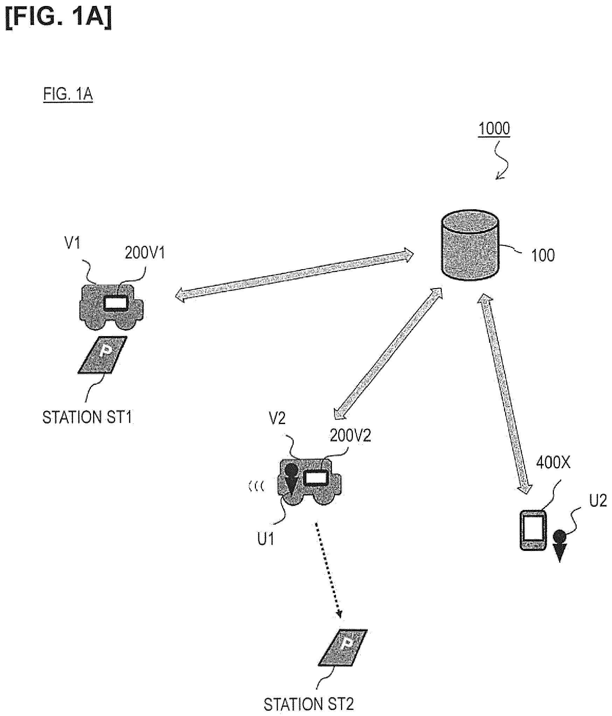

Here, Figure 1A is a schematic diagram illustrating one example of a method for a user to use a shared vehicle in a shared vehicle management system 1000, equipped with the shared vehicle management device 100 according to the present embodiment. In the shared vehicle management system 1000 of the present embodiment, a user selects a desired station from which to rent a shared vehicle (lending station) from a plurality of stations that are managed by the shared vehicle management device 100 by operating a user terminal device 400X, to make a use reservation of a shared vehicle that is on standby at the selected lending station.

For example, in the case illustrated in Figure 1A, if a user U2 selects station ST1 as the lending station, it is possible to make a use reservation for a shared vehicle V1 that is on standby at station ST1. At this time, a given station can be additionally set as a station to which the shared vehicle will be returned after use (drop-off station). Alternatively, the user U2 can set this drop-off station at the desired timing after making a use reservation for a shared vehicle. It thereby becomes possible for the user to utilize the drop-off type one-way car sharing system, by boarding the reserved shared vehicle and using the shared vehicle, and thereafter returning the used shared vehicle to the set drop-off station.

On the other hand, in the case illustrated in Figure 1A, if the user U2 selects station ST2 as the lending station, since a shared vehicle that is on standby is not present at station ST2, the shared vehicle management device 100 transmits information to the effect that a shared vehicle that can currently be used is not present at station ST2, and that a shared vehicle cannot be lent at the station ST2, to the user terminal device 400X of the user U2. Alternatively, in the case illustrated in Figure 1A, if the user U2 selects station ST2 as the lending station, the shared vehicle management device 100 maintains a state in which lending of a shared vehicle cannot be accepted.

The foregoing is the basic configuration of the one-way car sharing system in the present embodiment. According to the present embodiment, in such a one-way car sharing system, if the lending station selected by the user is currently unavailable, information relating to the lending possibility of shared vehicles at predetermined stations that include the lending station is notified. In the present embodiment, it thereby becomes possible to propose to the user to utilize a shared vehicle at predetermined stations including the desired lending station, even if a shared vehicle cannot be used at the station desired by the user. As a result, opportunities for a shared vehicle to be utilized by the user increases, and the utilization rate of the shared vehicle is improved.

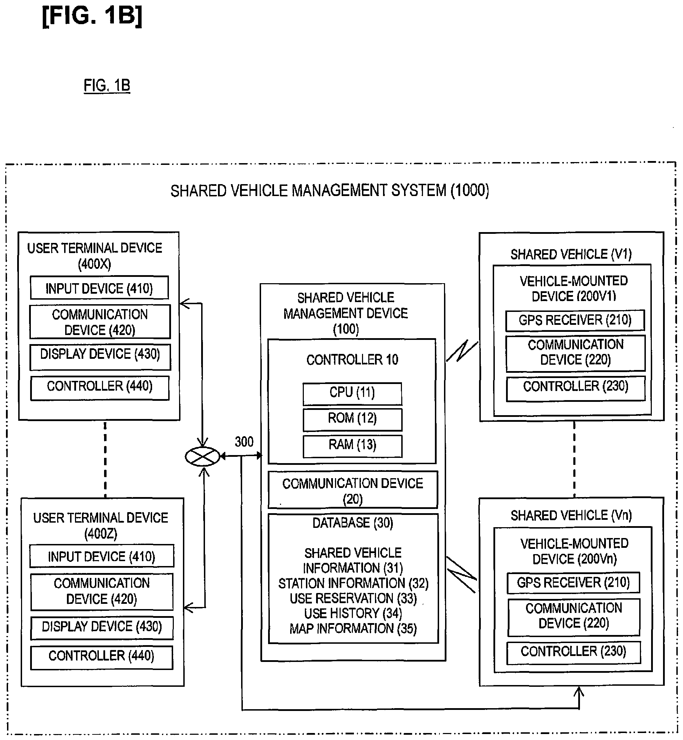

Figure 1B is a block diagram illustrating the shared vehicle management system 1000 of the present embodiment. As illustrated in Figure 1B, the shared vehicle management system 1000 of the present embodiment comprises a shared vehicle management device 100, vehicle-mounted devices 200V1-200Vn (hereinafter can be collectively referred to as vehicle-mounted device 200Vn) respectively provided in a plurality of shared vehicles V1-Vn (hereinafter can be collectively referred to as shared vehicle Vn) that are used by a plurality of users, and user terminal devices 400X-400Z (hereinafter can be collectively referred to as user terminal device 400X) that are respectively in the possession of a plurality of users. The numbers of vehicle mounted devices 200V1-200Vn and user terminal devices 400X-400Z that configure the shared vehicle management system 1000 of the present embodiment are not limited.

The shared vehicle management device 100, vehicle-mounted devices 200V1-200Vn, and user terminal devices 400X-400Z respectively comprise communication devices (20, 220, 420), and are able to send and receive information to each other via a telecommunications network, such as the Internet 300. The communication pathway can be wired or wireless.

The user terminal device 400X of the present embodiment is a computer, provided with a ROM (Read Only Memory) that stores programs that are applied to the user terminal device 400X according to the present embodiment of the present invention, a CPU (Central Processing Unit) that acts as an operation circuit for executing each function, by executing the programs that are stored in this ROM, and a RAM (Random Access Memory) that functions as an accessible storage device. The user terminal device 400X of the present embodiment can be a personal computer, a smartphone, a PDA (Personal Digital Assistant), and other portable terminal devices.

The user terminal device 400X of the present embodiment comprises an input device 410 for receiving input information, such as use reservations from each user requesting the use of a shared vehicle Vn at a desired lending station, a communication device 420 that communicates with external devices, such as the shared vehicle management device 100, a display device 430 for notifying information to each user, and a controller 440 that executes a control process for the use of a shared vehicle Vn by a user.

Examples of input devices 410 of the user terminal device 400X that can be used include a touch panel or a joystick that is arranged on the display screen and with which a user can carry out manual inputs, and devices, such as microphones, with which a user can carry out voice inputs. An example of a display device 430 is a display, which can also be used as the input device 410 if using a touch panel display.

The controller 440 of the present embodiment acquires information on the current location of the user that operates the user terminal device 400X using a location acquisition device provided to the user terminal device 400X, such as a GPS (Global Positioning System) receiver, which is not shown, and transmits the acquired current location information to the shared vehicle management device 100 via the communication device 420.

In addition, the controller 440 receives input information, such as use reservations, from each user requesting the use of a shared vehicle Vn, and transmits the information to the shared vehicle management device 100 via the communication device 420. In the present embodiment, examples of use reservations of shared vehicles Vn include reservations requesting immediate use, in which the user starts the use of a shared vehicle Vn immediately after transmitting a use reservation, and reservations requesting a reserved use, in which the use of a shared vehicle Vn is started from a desired time.

The use reservation described above includes the user's ID information, the user's current location information, information on the lending station set by the user, the ID information of the shared vehicle Vn that the user is trying to use, and information on the drop-off station that is set by the user. When necessary, the user terminal device 400X of the present embodiment receives information on each station, information on shared vehicles Vn that are candidates for use at each station, and the like, from the shared vehicle management device 100. In the present embodiment, setting of the drop-off station can be carried out at the timing at which a use reservation is transmitted in this manner, or be carried out at a desired timing during use of the shared vehicle Vn, after transmitting a use reservation for a shared vehicle Vn.

In addition, in the present embodiment, the user terminal device 400X can function as a navigation device for guiding a travel route of the shared vehicle Vn to the user. In this case, the user terminal device 400X can be configured such that, for example, map information is stored in advance in the ROM, or the like, that is provided to the user terminal device 400X, and the current location of the shared vehicle Vn that the user is currently using and the location of the drop-off station that the user has set are displayed, along with the map information, on the display device 430, to guide the travel route from the current location of the shared vehicle Vn to the drop-off station.

The vehicle-mounted device 200Vn of the present embodiment comprises a GPS receiver 210 that detects the current location of each shared vehicle Vn, a communication device 220 that communicates with an external device, such as the shared vehicle management device 100, and a controller 230 for executing the control process for the use of a shared vehicle Vn by the user.

This vehicle-mounted device 200Vn can be a simple configuration that utilizes the function of the user terminal device 400X. For example, if a GPS receiver, a communication device, route calculation and route guiding device are installed on the user terminal device 400X, the vehicle-mounted device 200Vn can carry out only the user authentication shown below, utilizing those functions.

In the present embodiment, the controller 230 carries out a user authentication, regarding whether or not the user that has boarded the shared vehicle Vn matches the user that made the use reservation of the shared vehicle Vn, using an authentication device (not shown) provided in the vehicle-mounted device 200Vn. For example, the controller 230 uses a device that is capable of communicating by NFC (Near Field Communication) as an authentication device to read the ID information of the user from a user terminal device 400X that is in the possession of the user or a membership card, etc., accesses the shared vehicle management device 100 via the communication device 200 to acquire reservation information for the shared vehicle Vn, and carries out a user authentication of the user that has boarded the shared vehicle Vn.

In addition, the controller 230 transmits information on the current location acquired using the GPS receiver 210 to the shared vehicle management device 100 via the communication device 220.

Furthermore, the controller 230 notifies information, etc., transmitted from the shared vehicle management device 100 to the user, using a display or a speaker, which are not shown. In the present embodiment, the controller 230 receives, for example, information on each station and information on shared vehicles Vn that can be used at each station from the shared vehicle management device 100, and notifies the user.

In the present embodiment, the vehicle-mounted device 200Vn can function as a navigation device for guiding a travel route from the current location of the shared vehicle Vn to the drop-off station, in the same manner as the user terminal device 400X described above.

The shared vehicle management device 100 of the present embodiment comprises a controller 10 that functions as a server for the shared vehicle management system 1000 and that executes a control process for managing and operating the car sharing system, a communication device 20 that can mutually communicate with the vehicle-mounted device 200Vn and the user terminal device 400X, and a database 30 that stores information received from the communication device 20, information on each shared vehicle Vn, and information on each station, or the like.

In the present embodiment, the controller 10 appropriately stores the information received from each user terminal device 400X and each vehicle-mounted device 200Vn via the communication device 20 in the database 30. Then, the controller 10 manages the use and return of the shared vehicle Vn by the user, based on the information that is received by the communication device 20 and the information that is stored in the database 30, by the functions described later.

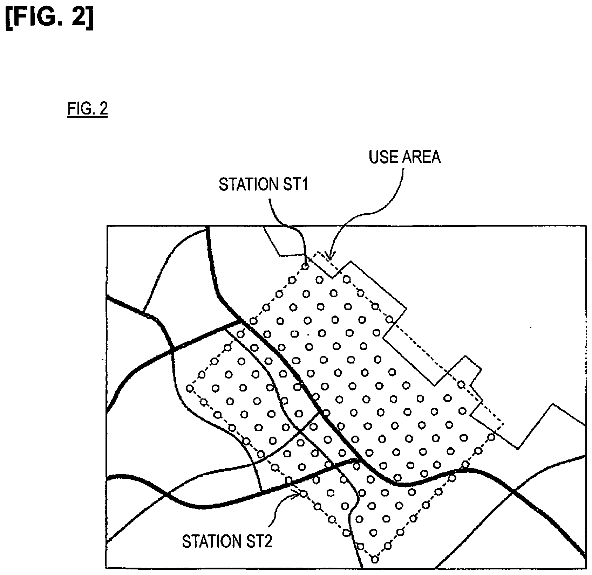

For example, in the present embodiment, a plurality of stations indicated by the circles are provided in a predetermined use area on the map (area indicated by the dashed line in Figure 2), and in a case in which a user uses a shared vehicle Vn rented from station ST1 and thereafter returns the shared vehicle Vn to station ST2, the controller 10 is configured to manage the use and return of the shared vehicle Vn by the user, as illustrated in Figure 2. In the example illustrated in Figure 2, the stations are arranged such that the distances between adjacent stations become equal, but the mode of arrangement is not limited thereto.

In addition, the controller 10 determines whether or not the lending station set by the user is currently available, based on the use reservation that is transmitted by the user, using the user terminal device 400X or the vehicle-mounted device 200Vn. Specifically, in the case that a shared vehicle Vn that is on standby is present in the station that is set as the lending station, and the shared vehicle Vn is not set as the lending station by another user, it is determined that the station is currently available.

Additionally, in the case that the lending station that is set by the user is determined to be currently unavailable based on the use reservation that is transmitted by the user, the controller 10 transmits lending possibility information relating to the lending possibility of the shared vehicle Vn at the station. Lending possibility information includes information on the presence/absence of shared vehicles Vn by which the station has been reserved as the drop-off station, information on the maximum use time and the predicted arrival time at the station, which is predicted from the lending time, use start time, and use history of the shared vehicle Vn, and the like. If the station is already reserved as the drop-off station but it is before the user who made the reservation has started use, the controller 10 can transmit information such as the reservation cancellation rate (per station, per user), etc., that is obtained from the use history as pieces of the lending possibility information as well. Other than the above, the controller 10 can add information relating to the cause of the station being unavailable as a piece of lending possibility information. Furthermore, the controller 10 can transmit information relating to the lending possibility of shared vehicles Vn at other stations besides the lending station that is set by the user as a part of lending possibility information. Similarly, when the user sets a drop-off station and it is determined that the set drop-off station is currently unavailable, the controller 10 transmits to the user, drop-off possibility information relating to the return possibility of the shared vehicle Vn at predetermined stations including the station that is desired as the drop-off station. In the present embodiment, it thereby becomes possible to propose to the user to utilize predetermined stations including the desired station, even if the station desired by the user cannot be used. As a result, opportunities for a shared vehicle Vn to be utilized by the user increases, and the utilization rate of the shared vehicle Vn in the car sharing system is improved.

The database 30 of the shared vehicle management device 100 according to the present embodiment stores shared vehicle information 31, station information 32, use reservation 33 received from the user, use history 34, and map information 35. In the example illustrated in Figure 1B, an example was illustrated in which only one database 30 is provided, but the shared vehicle management device 100 according to the present embodiment can be provided with a plurality of databases 30, and the shared vehicle information 31, the station information 32, the use reservation 33, the use history 34 and the map information 35 can be separately stored in each database 30.

Here, shared vehicle information 31 is information on each shared vehicle Vn, and station information 32 is information on each station.

Additionally, the use reservation 33 is input information that each user inputs using a user terminal device 400X or a vehicle-mounted device 200Vn, in order to request the use of a shared vehicle Vn. The use history 34 is information that stores information on the history of each user utilizing a shared vehicle Vn, an example being information on the use time of the shared vehicle Vn when the shared vehicle Vn is used by each user.

The controller 10 of the shared vehicle management device 100 according to the present embodiment comprises a ROM (Read Only Memory) 12 that stores programs for executing processes to manage and operate a car sharing system, a CPU (Central Processing Unit) 11 that acts as an operation circuit that functions as a shared vehicle management device 100 by executing the programs that are stored in this ROM 12, and a RAM (Random Access Memory) 13 that functions as an accessible storage device, as illustrated in Figure 1B.

The controller 10 of the shared vehicle management device 100 realizes a use reservation reception function, a use history management function, a lending possibility determination function, a lending possibility information generation function, a drop-off possibility information generation function, a notification function, and a return reception function. The controller 10 of the shared vehicle management device 100 according to the present embodiment is a computer that realizes each function by a cooperation between software for realizing the functions described above, and the above-described pieces of hardware.

Each function that is realized by the controller 10 of the shared vehicle management device 100 will be described below.

First, the use reservation reception function that is executed by the controller 10 of the present embodiment will be described. The controller 10 acquires use reservation that requests the use of a shared vehicle Vn from the user terminal device 400X by the use reservation reception function, and stores the acquired use reservation information in the database 30 as use reservation 33. As described above, use reservation includes the user's ID information, the user's current location information, information on the lending station set by the user, the ID information of the shared vehicle Vn that the user is trying to use, and information on the drop-off station that is set by the user.

Next, the use history management function that is executed by the controller 10 of the present embodiment will be described. In the present embodiment, the controller 10 stores information on the use time, etc., as use history 34 when each user utilizes a shared vehicle Vn in the database 30, by the use history management function. The use time can be the time from when the user transmits a use reservation of a shared vehicle Vn to when the shared vehicle Vn is returned, or can be the time from when the user starts to use the shared vehicle Vn (the point in time in which the user boards the shared vehicle Vn or the point in time in which the ignition switch, power switch, etc., of the shared vehicle Vn is turned ON) to when the shared vehicle Vn is returned. Then, in the present embodiment, the controller 10 calculates the average use time of each shared vehicle Vn that is lent at each station and extracts the maximum use time based on information on the use time that is stored in the database 30. The average use time and the maximum use time are, for example, calculated and extracted according to the type of the shared vehicle Vn for each station. Specifically, to describe using station ST1 of Figure 1A as an example, the average use time and the maximum use time of when a shared vehicle V1 is lent out, and the average use time and the maximum use time when a shared vehicle V2 that is different from the shared vehicle V1 is lent out, are each calculated and extracted.

In addition, the controller 10 stores information on the use preparation time, which is the average time between when each user transmits a use reservation and when the user actually starts using the shared vehicle Vn, by the use history management function. In the car sharing system of the present embodiment, when transmitting a use reservation using a user terminal device 400X, each user moves to the set lending station on foot, etc., after transmitting a use reservation, boards the shared vehicle Vn, and starts to use the shared vehicle Vn. In the present embodiment, the controller 10 receives information on the time from the transmission of such a use reservation to when the use of the shared vehicle Vn is actually started from each user, and stores the average value of this time in the database 30 as use preparation time.

Furthermore, the controller 10 stores information on the cancellation rate based on the history of each user canceling a use reservation after transmitting a use reservation, by the use history management function. For example, this cancellation rate can be calculated according to the type of the shared vehicle Vn for each station, in the same manner as the average use time and the maximum use time described above.

Next, the lending possibility determination function that is executed by the controller 10 of the present embodiment will be described. In the present embodiment, the controller 10 determines whether or not the lending station set by the user in the use reservation is currently available, by the lending possibility determination function. Specifically, the controller 10 determines that a station set by the user as the lending station is currently available in the case that a shared vehicle Vn that is on standby is currently present, and the station is not set as the lending station by another user.

Next, the lending possibility information generation function that is executed by the controller 10 of the present embodiment will be described. In the present embodiment, in the case that the lending station that is set by the user is determined to be currently unavailable by the lending possibility determination function described above, the controller 10 generates lending possibility information relating to the lending possibility of the shared vehicle Vn at predetermined stations including the desired station. The generated lending possibility information is transmitted to the user by the notification function described later.

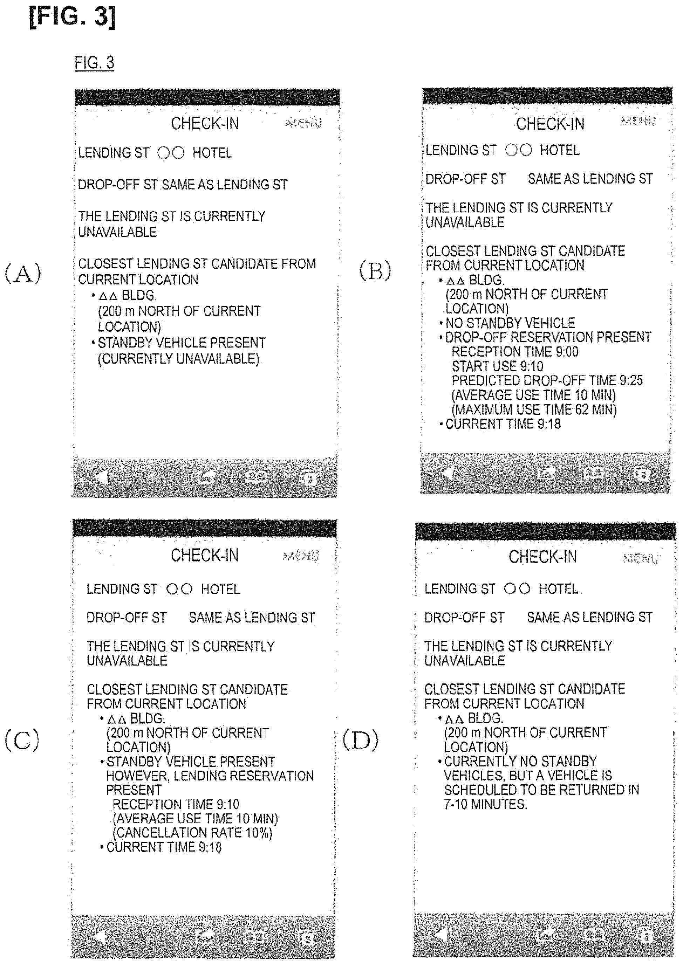

An example of lending possibility information is information on whether or not a station that is present within a predetermined distance from the current location of the user is currently available as a lending station. Examples include the location information of, and information on whether or not a shared vehicle Vn that is currently on standby and that can be used is present at a station (described as △△ Bldg. a lending ST candidate in Figure 3A) that is present within a predetermined distance from the current location of the user, and that is the closest station from the current location of the user, as illustrated in Figure 3A. Figure 3A and Figures 3B-3D described later are views illustrating a case in which a user sets ○○ Hotel as both a lending station (lending ST) and a drop-off station (drop-off ST), and the controller 10 displays lending possibility information on the user terminal device 400X of the user.

Additionally, an example of lending possibility information is information on whether or not a station is set as a drop-off station by another user, based on the use reservation 33 stored in the database 30. In this case, lending possibility information can include information on the time that another user made a use reservation for the shared vehicle Vn ("reception time" illustrated in Figure 3B), information on the time that the other user actually started to use the shared vehicle Vn after making a use reservation for the shared vehicle Vn ("start use" illustrated in Figure 3B), and information on the time that the other user is predicted to return the shared vehicle Vn ("predicted drop-off time" illustrated in Figure 3B), as illustrated in Figure 3B. In Figure 3B, when a station is set as a drop-off station by another user, it is described as "drop-off station reservation present." Additionally, in Figure 3B, information on the average use time and the maximum use time of the shared vehicle Vn that is to be returned to △△ Bldg. based on the use history 34 that is stored in the database 30 is also indicated as lending possibility information. The predicted drop-off time can be calculated by the controller 10, for example, based on the past use history of the vehicle Vn by each user and the past use history of the shared vehicle Vn by a specific user, with reference to the use history 34 stored in the database 30.

Alternatively, another example of lending possibility information is information to the effect that while a shared vehicle Vn that is currently on standby is present, another user has made a use reservation for the shared vehicle Vn that is on standby, at the closest station to the current location of the user, as illustrated in Figure 3C. In this case, lending possibility information can include information on the time ("reception time" illustrated in Figure 3C) that the other user made a use reservation for the shared vehicle Vn, as illustrated in Figure 3C. In Figure 3C, when there is a use reservation from another user, it is described as "lending reservation present". Additionally, the lending possibility information illustrated in Figure 3C also indicates information on the use preparation time ("use preparation time" illustrated in Figure 3C) from when a user transmits a use reservation to when the user actually starts to use the shared vehicle Vn, based on the use history 34 stored in the database 30, regarding the shared vehicle Vn that will be started to be used at △△ Bldg. Furthermore, lending possibility information can include information on the cancellation rate at which each user cancels the use reservation after transmitting a use reservation at that station, based on the use history 34 stored in the database 30.

In the example described above, an example was shown in which lending possibility information is generated relating to the closest station from the current location of the user, from among the stations that are present within a predetermined distance from the current location of the user, but the lending possibility information to be generated can be information relating to any other station that is present within a predetermined distance from the current location of the user, any station that is present within a predetermined distance from the lending station that is set by the user, or any station that is present within a predetermined distance from the desired renting location that the user has set in advance as the desired location for renting a shared vehicle Vn.

In the present embodiment, the controller 10 can notify the user all of the lending possibility information that is generated by the lending possibility information generation function by the notification function described later, but can notify the user only of specific information having a high priority from among the generated lending possibility information. For example, the controller 10 can be configured to preferentially notify information on a certain station based on the use history 33 that is stored in the database 30 (for example, information on whether or not a shared vehicle Vn that is currently on standby is present, and information on whether or not a shared vehicle Vn is scheduled to be returned by another user), and further notify the user of lending possibility information based on the use reservation 34 stored in the database 30, if the user requests detailed lending possibility information. In addition, the user of the user terminal device 400X can set information that is desired to be notified as lending possibility information in advance. In the present embodiment, for example, the user can be notified only of information to the effect that, while a shared vehicle Vn that is currently on standby is not present at the △△ Bldg. station, a shared vehicle Vn is scheduled to be returned by another user after 7-10 minutes (that is, another user has set the station as a drop-off station), from among the generated lending possibility information, and other lending possibility information can be further notified in response to a request from the user, as illustrated in Figure 3D.

Next, the drop-off possibility information generation function that is executed by the controller 10 of the present embodiment will be described. In the present embodiment, the controller 10 generates return possibility information relating to the return possibility of the shared vehicle Vn at predetermined stations including the desired station, when a user that is using or is trying to use a shared vehicle Vn sets a drop-off station for returning the shared vehicle Vn, but the drop-off station is not currently available. Cases in which a drop-off station is currently unavailable include, for example, cases in which shared vehicles Vn are on standby and there is no additional space to which a shared vehicle Vn can be returned, and cases in which a space for parking a shared vehicle Vn is present, but there is another user who is scheduled to return a shared vehicle Vn has set the space as the drop-off station. The generated drop-off possibility information is transmitted to the user by the notification function described later.

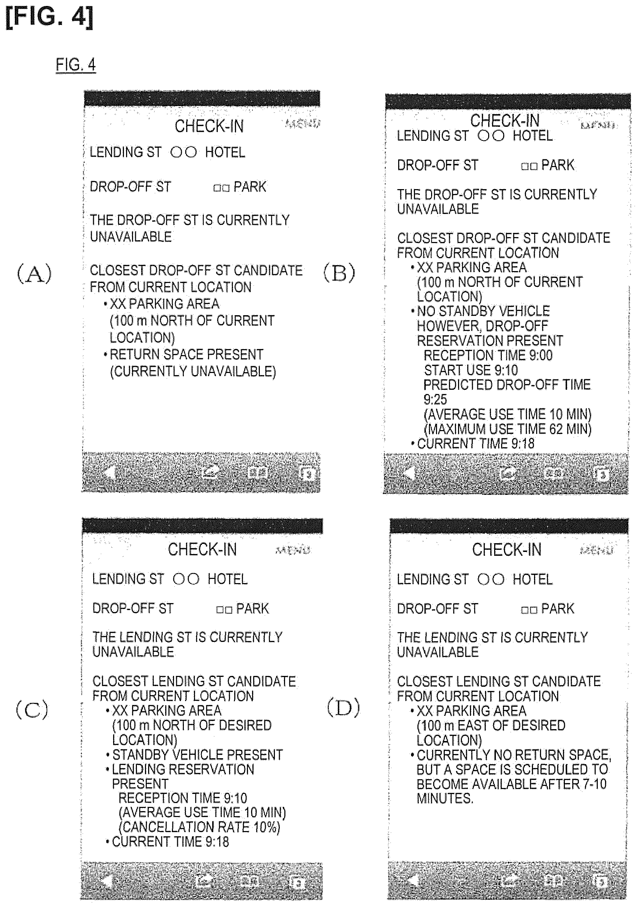

An example of drop-off possibility information if information on whether or not a station that is present within a predetermined distance from the current location of the user is currently available as a drop-off station. Examples include the location information of, and information on whether or not there is space to which a shared vehicle Vn can be returned at, a station that is present within a predetermined distance from the current location of the user, and that is the closest station from the current location of the user (described as XX Parking Area as a drop-off ST candidate in Figure 4A), as illustrated in Figure 4A. Figure 4A and Figures 4B-4D described later are views illustrating a case in which a user sets ○○ Hotel as a lending station (lending ST) and □□ Park as a drop-off station (drop-off ST), and the controller 10 displays drop-off possibility information on the user terminal device 400X of the user.

Additionally, information on whether or not the station is set as a drop-off station by another user, based on the use reservation 33 stored in the database 30, can be generated as drop-off possibility information. In this case, drop-off possibility information can include information on the time that the other user made a use reservation for the shared vehicle Vn ("reception time" illustrated in Figure 4B), information on the time that the other user actually started to use the shared vehicle Vn after making a use reservation for the shared vehicle Vn ("start use" illustrated in Figure 4B), and information on the time that the other user is predicted to return the shared vehicle Vn ("predicted drop-off time" illustrated in Figure 4B), as illustrated in Figure 4B. In Figure 4B, when a station is set as a drop-off station by another user, it is described as "drop-off station reservation present." Additionally, in Figure 4B, information on the average use time and the maximum use time of the shared vehicle Vn that is to be returned to XX Parking Area based on the use history 34 that is stored in the database 30 is also indicated as drop-off possibility information.

Alternatively, another example of drop-off possibility information is information to the effect that while a shared vehicle Vn that is currently on standby is present, and there is no additional space to which a shared vehicle Vn can be returned, another user has made a use reservation for the shared vehicle Vn that is on standby, at the closest station from the current location of the user, as illustrated in Figure 4C. In this case, drop-off possibility information can include information on the time ("reception time" illustrated in Figure 4C) that the other user made a use reservation for the shared vehicle Vn, as illustrated in Figure 4C. In Figure 4C, when there is a use reservation from another user, it is described as "lending reservation present." Additionally, the drop-off possibility information illustrated in Figure 4C also indicates information on the use preparation time ("use preparation time" illustrated in Figure 4C) from when a user transmits a use reservation to when the user actually starts to use the shared vehicle Vn, based on the use history 34 stored in the database 30, regarding the shared vehicle Vn that will be started to be used at XX Parking Area. Furthermore, drop-off possibility information can include information on the cancellation rate at which each user cancels the use reservation after transmitting a use reservation at that station, based on the use history 34 stored in the database 30.

In the example described above, an example was shown in which drop-off possibility information is generated relating to the closest station from the current location of the user, from among the stations that are present within a predetermined distance from the current location of the user, but the drop-off possibility information to be generated can be information relating to any other station that is present within a predetermined distance from the current location of the user, any station that is present within a predetermined distance from the drop-off station that is set by the user, or any station that is present within a predetermined distance from the desired returning location that the user has set in advance as the desired location for returning a shared vehicle Vn.

In the present embodiment, the controller 10 can notify the user of all of the drop-off possibility information that is generated by the drop-off possibility information generation function by the notification function described later, but can notify the user only of specific information regarding the generated drop-off possibility information, in the same manner as the lending possibility information described above. In this case, other drop-off possibility information can be further notified to the user, if the user requests detailed drop-off possibility information.

Next, the notification function that is executed by the controller 10 of the present embodiment will be described. The controller 10 communicates with each vehicle-mounted device 200Vn and each user terminal device 400X, and notifies, to the user, information to the effect that a use reservation of a shared vehicle Vn has been received, and the like. Additionally, the controller 10 notifies at least one of lending possibility information that is generated by the lending possibility information generation function described above, and drop-off possibility information that is generated by the drop-off possibility information generation function described above, in the mode illustrated in Figures 3A -3D, and Figures 4A-4D.

Next, the return reception function that is executed by the controller 10 of the present embodiment will be described. The return reception function of the controller 10 is a function to receive a return of a shared vehicle Vn, in response to a return request for the shared vehicle Vn that is transmitted by the user via a vehicle-mounted device 200Vn or a user terminal device 400X.

For example, if station ST2 is set as the drop-off station for a shared vehicle V2, the controller 10 is able to receive a return of the shared vehicle V2 by a user U1 transmitting a return request to the shared vehicle management device 100 by operating a vehicle-mounted device 200V2, after parking the shared vehicle V2 at station ST2, as illustrated in Figure 1A.

A return request that is transmitted by a user includes the ID information as well as the current location information of the shared vehicle Vn that was used by the user, and the controller 10 reads information corresponding to the ID information of the shared vehicle Vn from among the use reservation 33 that is stored in the database 30, based on the ID information of the shared vehicle Vn that is included in the received return request, determines whether or not the shared vehicle Vn is located at the drop-off station that is set in advance, and treats the shared vehicle Vn as having been properly returned if it is determined that the shared vehicle Vn is located at the drop-off station.

In the present embodiment, management and operation of the car sharing system is carried out by the functions that are realized by the controller 10 of the shared vehicle management device 100, as described above.

In the present embodiment, if the lending station that is set by the user is currently unavailable, the controller 10 of the shared vehicle management device 100 notifies, to the user, the above-described lending possibility information relating to predetermined stations that include the set lending station. In addition, if the drop-off station that is set by the user is currently unavailable, the controller 10 of the shared vehicle management device 100 notifies, to the user, the above-described drop-off possibility information relating to predetermined stations that include the set drop-off station. It thereby becomes possible to propose to the user to utilize a shared vehicle Vn at another station, and as a result, opportunities for a shared vehicle Vn to be utilized by the user increases, and the utilization rate of the shared vehicle Vn in the car sharing system is improved.

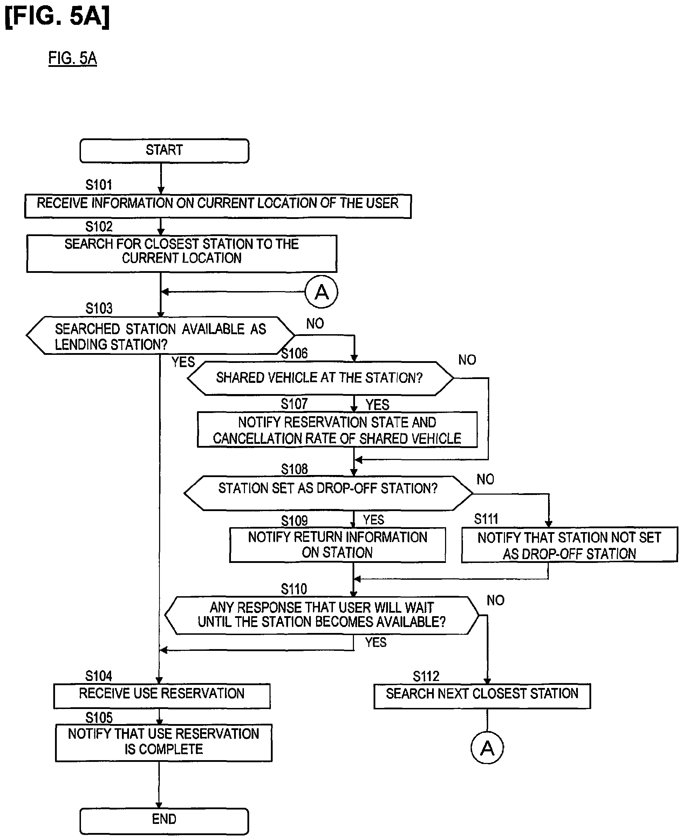

Next, an operation example of the present embodiment will be described. Figure 5A is a flowchart illustrating a control procedure with which the shared vehicle management device 100 of the present embodiment notifies lending possibility information to the user. The flowchart illustrated in Figure 5A illustrates the control procedure with which the shared vehicle management device 100 notifies the above-described lending possibility information to the user, when the lending station that is set by one user is currently unavailable, in a case in which a first user has transmitted a use reservation for using a first shared vehicle Vn.

First, in Step S101, the controller 10 of the shared vehicle management device 100 obtains information on the current location of the user from the user terminal device 400X of the user.

In Step S102, the controller 10 searches for a station that is the closest distance to the current location of the user, which is obtained in Step S101, and extracts information on the searched station from station information 32 in the database 30.

In Step S103, the controller 10 determines whether or not the station extracted in Step S102 is currently available as a lending station. Then, if it is determined in Step S103 that the extracted station is currently available as a lending station, the process proceeds to Step S104. On the other hand, if it is determined in Step S103 that the extracted station is currently unavailable as a lending station, the process proceeds to Step S106.

If it is determined in Step S103 that the extracted station is currently available as a lending station, the process proceeds to Step S104, and in Step S104, the controller 10 receives the use reservation that is transmitted by the user. Then, in Step S105, the controller 10 notifies to the user that the use reservation has been received, by transmitting to the vehicle-mounted device 200Vn or the user terminal device 400X with the communication device 20, and ends the present process.

On the other hand, if it is determined in Step S103 that the extracted station is currently unavailable as a lending station, the process proceeds to Step S106, and in Step S106, the controller 10 determines whether or not a shared vehicle Vn is present that is currently parked at the station extracted in Step S102. Then, if it is determined in Step S106 that a shared vehicle Vn is present that is currently parked at the extracted station, the process proceeds to Step S107. Then, if it is determined in Step S106 that a shared vehicle Vn is not present that is currently parked at the extracted station, the process proceeds to Step S108.

In Step S107, the controller 10 refers to the use reservation 33 and the use history 34, which are stored in the database 30, relating to the shared vehicle Vn that is parked at the extracted station, and notifies, to the user, information on the presence/absence of a use reservation (lending reservation) by another user, and information on the cancellation rate of the use reservation, as illustrated in Figures 3C, 3D. When notifying information to the user as illustrated in Figures 3C, 3D, only specific information having a high priority can be first notified to the user, and other information can be notified to the user if the user requests detailed information, as described above. For example, the controller 10 can first notify information based on the use reservation 33 that is stored in the database 30 (information on the presence/absence of a use reservation illustrated in Figure 3C (lending reservation), information on the reception time, etc.), and thereafter notify information based on the use history 34 that is stored in the database 30 (information on the use preparation time illustrated in Figure 3C, information on the cancellation rate, etc.), in response to a request from the user.

In Step S108, the controller 10 determines whether or not there is another user that has set the station extracted in Step S102 as a drop-off station. Then, if it is determined in Step S108 that there is another user that has set the extracted station as a drop-off station, the process proceeds to Step S109. On the other hand, if it is determined in Step S108 that another user that has set the extracted station as a drop-off station is not present, the process proceeds to Step S111.

If it is determined in Step S108 that there is another user that has set the extracted station as a drop-off station, the process proceeds to Step S109, and in Step S109, the controller 10 notifies, to the user, information to the effect that the extracted station has been set as a drop-off station by another user, as illustrated in Figure 3B described above. In this case, for example, the controller 10 can first notify information based on the use reservation 33 that is stored in the database 30 (information on the presence/absence of a setting of a drop-off station (drop-off reservation) illustrated in Figure 3B, information on the reception time, etc.), and thereafter notify information based on the use history 34 that is stored in the database 30 (information on start use illustrated in Figure 3B, information on the average use time, information on the maximum use time, and information on the predicted drop-off time, etc.), in response to a request from the user.

On the other hand, if it is determined in Step S108 that another user that has set the extracted station as a drop-off station is not present, the process proceeds to Step S111, and in Step S111, the controller 10 notifies, to the user, information to the effect that the extracted station has not been set as a drop-off station by another user.

In Step S110, the controller 10 determines whether or not a response has been transmitted by the user to the effect that the user is going to wait until the station extracted in Step S102 becomes available as a lending station. Then, if it is determined in Step S110 that a response has been transmitted by the user, to the effect that the user is going to wait until the station becomes available, the process proceeds to Step S104 described above. On the other hand, if it is determined in Step S110 that a response has not been transmitted by the user, to the effect that the user is going to wait until the station becomes available, the process proceeds to Step S112, and in Step S112, the controller 10 searches and extracts the next closest station after the station extracted in Step S102 from the current location of the user, and the process returns to Step S103 described above.

In the present embodiment, a process for the shared vehicle management device 100 to notify lending possibility information to the user is carried out as described above.

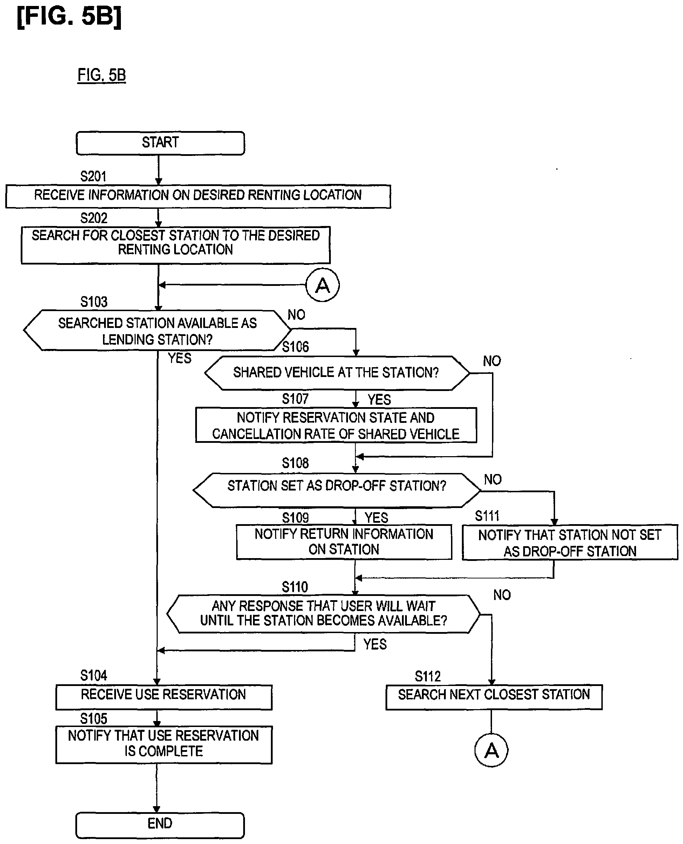

In the present embodiment, the process to notify lending possibility information to the user described above can be carried out by the method illustrated in Figure 5B as well. Figure 5B is a flowchart illustrating another example of a process to notify lending possibility information to the user. Another example of the use reservation reception process will be described with reference to Figure 5B. The operation procedure illustrated in Figure 5B is the same as the operation procedure illustrated in Figure 5A, other than having changed the procedures of Steps S101, S102 to Steps S201, S202. Accordingly, Figure 5B is provided with the same step reference symbols as Figure 5A, and descriptions thereof will be cited in the present example.

First, in Step S201 illustrated in Figure 5B, the controller 10 receives information on the desired renting location, which the user sets as a desired location at which to rent a shared vehicle Vn.

In Step S202, the controller 10 searches for a station that is the closest distance to the desired renting location of the user, which is obtained in Step S201, and extracts information on the searched station.

In the following Steps S103-S112, the controller 10 carries out the same procedure as the flowchart of Figure 5A described above, with respect to the station extracted in Step S202.

The process illustrated in Figure 5B is carried out as described above.

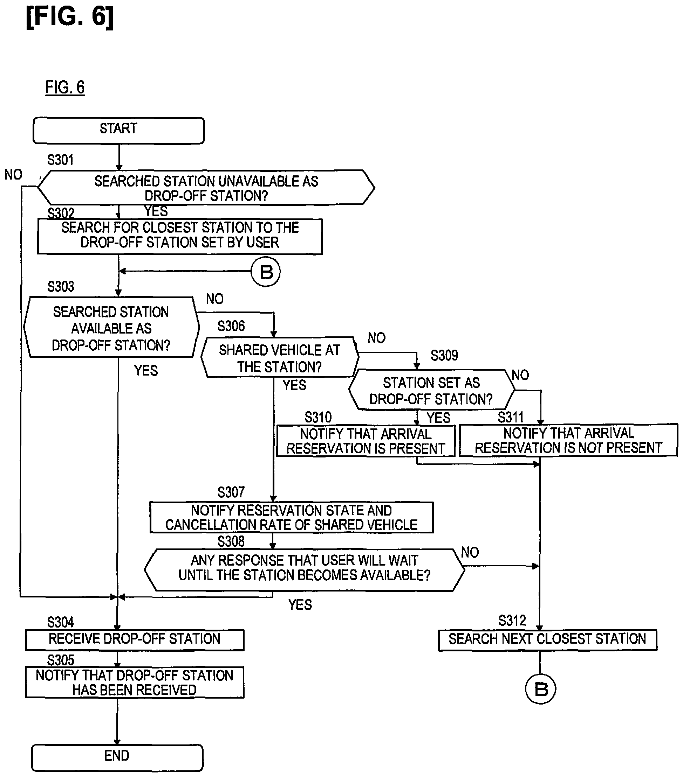

Next, the flowchart illustrated in Figure 6 illustrates the control procedure with which the shared vehicle management device 100 notifies the above-described drop-off possibility information to the user, when a user that is using or is trying to use a shared vehicle Vn carries out an operation to set a drop-off station for returning the shared vehicle Vn, using a user terminal device 400X.

First, in Step S301 illustrated in Figure 6, the controller 10 determines whether or not the drop-off station that is set by the user is currently available. Then, if it is determined in Step S301 that the set drop-off station is currently unavailable, the process proceeds to Step S302. On the other hand, if it is determined in Step S301 that the set drop-off station is currently available, the process proceeds to Step S304.

In Step S302, the controller 10 searches for a station that is the closest distance to the drop-off station that is set by the user, and extracts information on the searched station from station information 32 in the database 30.

In Step S303, the controller 10 determines whether or not the station extracted in Step S302 is currently available as a drop-off station. Then, if it is determined in Step S303 that the extracted station is currently available as a drop-off station, the process proceeds to Step S304. On the other hand, if it is determined in Step S303 that the extracted station is currently unavailable as a drop-off station, the process proceeds to Step S306.

If it is determined in Step S303 that the extracted station is currently available as a drop-off station, the process proceeds to Step S304, and in Step S304, the controller 10 accepts the drop-off station that is set by the user. Then, in Step S305, the controller 10 notifies to the user that the drop-off station has been accepted, by transmitting to the vehicle-mounted device 200Vn or the user terminal device 400X with the communication device 20, and ends the present process.

On the other hand, if it is determined in Step S303 that the extracted station is currently unavailable as a lending station, the process proceeds to Step S306, and in Step S306, the controller 10 determines whether or not a shared vehicle Vn is present that is currently parked at the station extracted in Step S302. Then, if it is determined in Step S306 that a shared vehicle Vn is present that is currently parked at the extracted station, the process proceeds to Step S307. On the other hand, if it is determined in Step S306 that a shared vehicle Vn is not present that is currently parked at the extracted station, the process proceeds to Step S309.

If it is determined in Step S306 that a shared vehicle Vn is present that is currently parked at the extracted station, the process proceeds to Step S307, and in Step S307, the controller 10 refers to the use reservation 33 and the use history 34, which are stored in the database 30, relating to the shared vehicle Vn that is parked at the extracted station, and notifies, to the user, information on the presence/absence of a use reservation (lending reservation) by another user, and information on the cancellation rate of the use reservation, as illustrated in Figures 4C, 4D. When notifying information to the user as illustrated in Figures 4C, 4D, only specific information having a high priority can be first notified to the user, and other information can be notified to the user if the user requests detailed information, as described above. For example, the controller 10 can first notify information based on the use reservation 33 that is stored in the database 30 (information on the presence/absence of a use reservation illustrated in Figure 4C (lending reservation), information on the reception time, etc.), and thereafter notify information based on the use history 34 that is stored in the database 30 (information on the use preparation time illustrated in Figure 4C, information on the cancellation rate, etc.), in response to a request from the user.

In Step S308, the controller 10 determines whether or not a response has been transmitted by the user to the effect that the user is going to wait until the station extracted in Step S302 becomes available as a drop-off station. Then, if it is determined in Step S308 that a response has been transmitted by the user, to the effect that the user is going to wait until the station becomes available, the process proceeds to Step S304 described above. On the other hand, if it is determined in Step S308 that a response has not been transmitted by the user, to the effect that the user is going to wait until the station becomes available, the process proceeds to Step S312, and in Step S312, the controller 10 searches and extracts the next closest station after the station extracted in Step S302 from the drop-off station that is set by the user, and the process returns to Step S303 described above.

On the other hand, if it is determined in Step S306 that a shared vehicle Vn is not present that is currently parked at the extracted station, the process proceeds to Step S309, and in Step S309, the controller 10 determines whether or not there is another user that has set the station extracted in Step S302 as a drop-off station. Then, if it is determined in Step S309 that there is another user that has set the extracted station as a drop-off station, the process proceeds to Step S310. On the other hand, if it is determined in Step S309 that another user that has set the extracted station as a drop-off station is not present, the process proceeds to Step S311.

If it is determined in Step S309 that there is another user that has set the extracted station as a drop-off station, the process proceeds to Step S310, and in Step S310, the controller 10 notifies, to the user, information to the effect that the extracted station has been set as a drop-off station by another user, as illustrated in Figure 4B described above. In this case, for example, the controller 10 can first notify information based on the use reservation 33 that is stored in the database 30 (information on the presence/absence of a setting of a drop-off station (drop-off reservation) illustrated in Figure 4B, information on the reception time, etc.), and thereafter notify information based on the use history 34 that is stored in the database 30 (information on start use illustrated in Figure 4B, information on the average use time, information on the maximum use time, and information on the predicted drop-off time, etc.), in response to a request from the user.

On the other hand, if it is determined in Step S309 that another user that has set the extracted station as a drop-off station is not present, the process proceeds to Step S311, and in Step S311, the controller 10 notifies, to the user, information to the effect that the extracted station has not been set as a drop-off station by another user, and the process proceeds to Step S312 described above.

In the present embodiment, a process for the shared vehicle management device 100 to notify drop-off possibility information to the user is carried out as described above.

The embodiment of the shared vehicle management system according to the present invention is configured and operates in the manner described above, and thus exerts the following effects.
[1] In the present embodiment, if the lending station that is set by the user is currently unavailable, lending possibility information relating to predetermined stations that include the set lending station is notified to the user. It thereby becomes possible to propose to the user to utilize a shared vehicle Vn at predetermined stations, and as a result, opportunities for a shared vehicle Vn to be utilized by the user increases, and the utilization rate of the shared vehicle Vn in the car sharing system is improved.
[2] In the present embodiment, since the lending possibility information includes information on whether or not any user has set the predetermined station described above as a drop-off station and information on the use history of each user, the user is able to obtain detailed information on stations that have the possibility of being used; as a result, the convenience of the car sharing system is improved.
[3] In the present embodiment, if a shared vehicle Vn is present at the predetermined station and the shared vehicle Vn is reserved for use, the lending possibility information includes at least one of information on the time that the use reservation was made, information on the use preparation time from the time of the use reservation to when the shared vehicle Vn is actually started to be used, and information on the cancellation rate of use reservations; therefore, the user is able to obtain detailed information on stations that cannot be utilized, and as a result, the convenience of the car sharing system is improved.
[4] In the present embodiment, if a shared vehicle Vn is not present at the predetermined station described above and a user has set the station as a drop-off station, the lending possibility information includes at least one of information on the time of the use reservation of the shared vehicle Vn that is used by the user who has set the drop-off station, information on the time that the shared vehicle Vn was started to be used by the user, and information on the average use time and/or the maximum use time of the shared vehicle Vn by each user; therefore, the user is able to obtain detailed information on stations that have the possibility of being used, and as a result, the convenience of the car sharing system is improved.
[5] In the present embodiment, a station that is within a predetermined distance from the current location of the user (in particular, the station that is closest to the current location of the user), and a station that is within a predetermined distance from the desired renting location that is set by the user (in particular, the station that is closest to the desired renting location) can be selected as a predetermined station for which lending possibility information is generated; therefore, it becomes possible to provide information on convenient stations that are easy to access on foot, etc., for the user, and as a result, the convenience of the car sharing system is improved.
[6] In the present embodiment, if the drop-off station that is set by the user is currently unavailable, drop-off possibility information relating to predetermined stations that include the set drop-off station is notified to the user. It thereby becomes possible to propose to the user to utilize a shared vehicle Vn at predetermined stations, and as a result, opportunities for a shared vehicle Vn to be utilized by the user increases, and the utilization rate of the shared vehicle Vn in the car sharing system is improved.
[7] In the present embodiment, since the drop-off possibility information includes information on whether or not any user has set the predetermined station described above as a lending station and information on the use history of each user, the user is able to obtain detailed information on stations that have the possibility of being used; as a result, the convenience of the car sharing system is improved.
[8] In the present embodiment, if a shared vehicle Vn is present at the predetermined station and another user has made a use reservation to set the station as a lending station, the drop-off possibility information includes at least one of information on the time that the use reservation wash made, information on the use preparation time from the time of the use reservation to when the shared vehicle Vn is actually started to be used, and information on the cancellation rate of use reservations; therefore, the user is able to obtain detailed information on stations that cannot be utilized, and as a result, the convenience of the car sharing system is improved.
[9] In the present embodiment, if a shared vehicle Vn is not present at the predetermined station described above and a user has set the station as a drop-off station, the drop-off possibility information includes at least one of information on the time of the use reservation of the shared vehicle Vn that is used by the user who has set the drop-off station, information on the time that the shared vehicle Vn was started to be used by the user, and information on the average use time and/or the maximum use time of the shared vehicle Vn by each user; therefore, the user is able to obtain detailed information on stations that cannot be utilized, and as a result, the convenience of the car sharing system is improved.
[10] In the present embodiment, a station that is within a predetermined distance from the current location of the user (in particular, the station that is closest to the current location of the user), and a station that is within a predetermined distance from the desired returning location that is set by the user (in particular, the station that is closest to the desired returning location) can be selected as a predetermined station for which drop-off possibility information is generated; therefore, it becomes possible to provide information on convenient stations that are easy to access for the user, and as a result, the convenience of the car sharing system is improved.
[11] If the shared vehicle management method of the present embodiment is carried out, the actions and effects described above are exerted.

Embodiments of the present invention were described above, but these embodiments are described in order to facilitate understanding of the present invention, and are not described in order to limit the present invention. Therefore, the elements disclosed in the embodiments above are intended to include all design modifications and equivalents thereto that lie within the technical range of the present invention.

In the above-described embodiment, the controller 10 of the shared vehicle management device 100 corresponds to the reception management means of the present invention, the lending possibility determination means, notification means, drop-off management means, drop-off determination means, location acquisition means, and lending possibility determination means, and the database 30 of the shared vehicle management device 100 corresponds to the first storage means and the second storage means, respectively.

### Reference Signs List

1000 ... Shared vehicle management system
100 ... Shared vehicle management device
10 ... Controller
20 ... Communication device
30 ... Database
V1 - Vn ... Shared vehicle
200V1-200Vn ... Vehicle-mounted device
300 ... Internet
400X-400Z ... User terminal device

## Claims

1. A shared vehicle management device for managing a plurality of shared vehicles that are shared by a plurality of users, comprising:
a first storage means that stores information transmitted by users as reception information;
a second storage means that stores information on a plurality of stations where the shared vehicles are lent and returned, and stores information on use histories of the shared vehicles by the users;
a reception management means that receives, from the users, use reservations of the shared vehicles, including information on lending stations that are set as stations where the users desire to rent the shared vehicles and stores the same in the first storage means;
a lending possibility determination means that determines whether or not a lending station that is set by a user in the use reservation is currently available; and
a notification means that notifies, to the user, lending possibility information including information on the presence/absence of shared vehicle at predetermined stations that include the lending station that is set by the user, upon determining that the lending station that is set by the user is currently unavailable.

2. The shared vehicle management device according to claim 1, further comprising:
a drop-off management means that acquires information on a drop-off station that is set as a station to return the shared vehicle after use, by a user that is using or is trying to use the shared vehicle, and stores the information in the first storage means; and,
a drop-off determination means that refers to information that is stored in the first storage means and determines whether or not the predetermined station is set by any user as the drop-off station, wherein
the lending possibility information includes at least one of information on whether or not the station is set as the drop-off station by another user, the reception information that is stored in the first storage means, and information based on the use history that is stored in the second storage means.

3. The shared vehicle management device according to claim 2, wherein
when the shared vehicle is present at the predetermined station, but another user has made a use reservation for the shared vehicle,
the reception information that is stored in the first storage means includes information on the time that the other user made the use reservation, and
information based on the use history that is stored in the second storage means includes at least one of information on the average time, based on histories, between the time that each user makes a use reservation for the shared vehicle and when the shared vehicle is actually started to be used, and information on the cancellation rate at which the use reservation is canceled after each user makes a use reservation for the shared vehicle.

4. The shared vehicle management device according to claim 2, wherein
when the shared vehicle is not present at the predetermined station, and any user has set the station as a drop-off station,
the reception information that is stored in the first storage means includes at least one of information on the time of the use reservation by the user who set the drop-off station, and information on the time that the user who set the drop-off station started to use the shared vehicle, and
information based on the use history that is stored in the second storage means includes at least one of information, based on histories, on the average use time and/or the maximum use time, starting from the time of the use reservation for the shared vehicle by each user until the shared vehicle is returned, and information, based on histories, on the average use time and/or the maximum use time, starting from the use start time of the shared vehicle by each user until the shared vehicle is returned.

5. The shared vehicle management device according to any one of claims 1-4, further comprising:
a location acquisition means that acquires information on the current location of the user, wherein
the notification means notifies to the user from which the use reservation was received, the lending possibility information relating to stations that are present within a predetermined distance from the current location of the user.

6. The shared vehicle management device according to claim 5, wherein
the notification means notifies to the user from which the use reservation was received, the lending possibility information relating to the station that is present at the closest location to the current location of the user.

7. The shared vehicle management device according to any one of claims 1 to 6, wherein
the use reservation includes information on a desired renting location which the user sets as a desired location at which to rent the shared vehicle; and,
the notification means notifies to the user from which the use reservation was received, lending possibility information relating to stations that are present within a predetermined distance from the desired renting location that is set by the user.

8. The shared vehicle management device according to claim 7, wherein
the notification means notifies to the user from which the use reservation was received, the lending possibility information relating to the station that is present at the closest location to the desired renting location that is set by the user.

9. A shared vehicle management device for managing a plurality of shared vehicles that are shared by a plurality of users, comprising:
a first storage means that stores information transmitted by the users as reception information;
a second storage means that stores information on a plurality of stations where the shared vehicles are lent and returned, and stores information on use histories of the shared vehicles by the users;
a reception management means that receives, from the users, use reservations of the shared vehicles including information on lending stations that are set as stations where the users desire to rent the shared vehicles and stores the same in the first storage means;
a drop-off management means that acquires information on a drop-off station that is set as a station to return the shared vehicle after use, by a user that is using or is trying to use the shared vehicle, and stores the information in the first storage means;
a drop-off determination means that determines whether or not a drop-off station that is set by a user in the use reservation is currently available; and
a notification means that notifies to the user, return possibility information including information on the presence/absence of a space to which the shared vehicle can be returned, at predetermined stations that include the drop-off station that is set by the user, upon determining that the drop-off station that is set by the user is currently unavailable.

10. The shared vehicle management device according to claim 9, further comprising:
a lending possibility determination means that refers to information that is stored in the first storage means and determines whether or not the predetermined station is set by any user as the lending station, wherein
the return possibility information includes at least one of information on whether or not the station is set as the lending station by another user, the reception information that is stored in the first storage means, and information based on the use history that is stored in the second storage means.

11. The shared vehicle management device according to claim 10, wherein
when the shared vehicle is present at the predetermined station, but another user has made a use reservation to set the station as a lending station,
the reception information that is stored in the first storage means includes information on the time that the use reservation was made, and
information based on the use history that is stored in the second storage means includes at least one of information on the average time, based on histories, between the time that each user makes a use reservation for the shared vehicle and when the shared vehicle is actually started to be used, and information on the cancellation rate at which the use reservation is canceled after each user makes a use reservation for the shared vehicle.

12. The shared vehicle management device according to claim 10, wherein
when the shared vehicle is not present at the predetermined station, and any user has set the station as a drop-off station,
the reception information that is stored in the first storage means includes at least one of information on the time of the use reservation by the user who set the drop-off station, and information on the time that the user who set the drop-off station started to use the shared vehicle, and
information based on the use history that is stored in the second storage means includes at least one of information, based on histories, on the average use time and/or the maximum use time, starting from the time of the use reservation for the shared vehicle by each user until the shared vehicle is returned, and information, based on histories, on the average use time and/or the maximum use time, starting from the use start time of the shared vehicle by each user until the shared vehicle is returned.

13. The shared vehicle management device according to any one of claims 9-12, further comprising:
a location acquisition means that acquires information on the current location of the user, wherein
the notification means notifies to the user who set the drop-off station, the return possibility information relating to stations that are present within a predetermined distance from the current location of the user.

14. The shared vehicle management device according to claim 13, wherein the notification means notifies to the user who set the drop-off station, the return possibility information relating to the station that is present at the closest location from the current location of the user.

15. The shared vehicle management device according to any one of claims 9-14, further comprising:
the use reservation includes information on a desired renting location which the user sets as a desired location at which to return the shared vehicle; and,
the notification means notifies to the user who set the drop-off station, the return possibility information relating to stations that are present within a predetermined distance from the desired returning location that is set by the user.

16. The shared vehicle management device according to claim 15, wherein the notification means further notifies to the user who set the drop-off station, the return possibility information relating to the station that is present at the closest location from the desired returning location that is set by the user.

17. A shared vehicle management method comprising:
a computer for managing a plurality of shared vehicles that are shared by a plurality of users executes:
a step to store information that is transmitted from the users in a first storage medium;
a step to store information on a plurality of stations where the shared vehicles are lent and returned, and to store information on use histories of the shared vehicles by the users in a second storage medium;
a step to receive use reservations of the shared vehicles including information on lending stations that are set as stations where the users desire to rent the shared vehicles and to store the same in the first storage medium;
a step to determine whether or not a lending station that is set by a user in the use reservation is currently available; and
a step to notify to the user, lending possibility information including information on the presence/absence of the shared vehicle at predetermined stations that include the lending station that is set by the user, upon determining that the lending station that is set by the user is currently unavailable.

18. A shared vehicle management method comprising:
a computer for managing a plurality of shared vehicles that are shared by a plurality of users executes:
a step to store information that is transmitted from the users in a first storage medium;
a step to store information on a plurality of stations where the shared vehicles are lent and returned, and to store information on use histories of the shared vehicles by the users in a second storage medium;
a step to receive use reservations of the shared vehicles including information on lending stations that are set as stations where the users desire to rent the shared vehicles and to store the same in the first storage medium;
a step to acquire information on a drop-off station that is set as a station to return the shared vehicle after use, by a user that is using or is trying to use the shared vehicle, and to store the information in the first storage medium;
a step to determine whether or not a drop-off station that is set by a user in the use reservation is currently available; and
a step to notify, to the user, return possibility information including information on the presence/absence of a space to which the shared vehicle can be returned, at predetermined stations that include the drop-off station that is set by the user, upon determining that the drop-off station that is set by the user is currently unavailable.
